# EUROPEAN PATENT SPECIFICATION

(11) **EP 3 422 343 B1**
(45) Date of publication and mention of the grant of the patent: **29.07.2020**
(21) Application number: 17178644.5
(22) Date of filing: 29.06.2017
(51) Int. Cl.: G10L 15/08, H04M 3/22, H04M 3/20

(54) **SYSTEM AND METHOD FOR AUTOMATICALLY TERMINATING A VOICE CALL**
SYSTEM UND VERFAHREN ZUR AUTOMATISCHEN BEENDIGUNG EINES SPRACHANRUFS
SYSTÈME ET PROCÉDÉ DESTINÉ À ACHEVER AUTOMATIQUEMENT UN APPEL VOCAL

(43) Date of publication of application: 02.01.2019
(73) Proprietor: Vestel Elektronik Sanayi ve Ticaret A.S., 45030 Manisa (TR)
(72) Inventor: CUBUKCU, Baran, 45030 Manisa (TR)
(74) Representative: Ascherl, Andreas

(56) References cited:
- CN-A- 102 780 815
- CN-A- 105 072 280
- US-A1- 2004 204 123
- US-A1- 2015 348 538
- US-A1- 2015 364 129

## Description

This invention refers to a system for automatically terminating a voice call.

### Background of the Invention

In a busy schedule people may forget to terminate a voice call. This may lead to some unwanted problems in their personal or business life. In addition to that, this results in waste of energy for electronic devices, unnecessary communication band usage, not reached to the related person who forget terminating ongoing call because the line will be busy until the person terminates the call and so on. As a preventive action to these kinds of issues, an alternative solution is required to terminate the call automatically.

According to the prior art a method is known in which some devices can respond to terminate the call by some predefined actions. The predefined action is provided to terminate the call after getting commands from the end user. But in such cases the user has to give commands to the related device by calling someone, sending SMS and so on. Further according to this prior art, the device has only one option that is terminate the call when the user gives the command.

Document CN 102 780 815 A discloses a system for automatically terminating a call based on specific keywords. Document CN 105 072 280 A also discloses a system for automatically terminating a call based on specific keywords.

It is therefore the object of the present invention to provide a system, in particular a system for automatically terminating a voice call and a method which is effective and convenient.

### Description of the Invention

The invention is defined by the appended claims. The before mentioned object is solved by a system for automatically terminating a voice call according to claim 1. According to the invention the system has an artificial intelligence technology to terminate a call based on analyzing the voice conversation.

The system for automatically terminating a voice call according to the present invention comprises a memory unit in a device configured to store a set of defined keywords indicating the end of the voice conversation, a voice recognition system provided in the device and configured for recognizing a voice conversation between a caller and a receiver, wherein the voice recognition system is configured to detect at least one keyword of the set of defined keywords in the voice conversation of the voice call, wherein the voice recognition system is further configured to check whether the voice conversation is continued or not for a predefined time after detecting at least one keyword, and wherein the voice recognition system is configured to terminate the call after detecting at least one of the defined keywords if the voice conversation is not continued. The system for automatically terminating a voice call is characterized by the system being further configured for learning and storing new words as keywords if the words are used in a plurality of cases at the end of a voice conversation.

This solution is beneficial since such a system can eliminate waste of energy for electronic devices like e.g. mobile phones or the like, unnecessary communication band usage not reached to the related person who forget terminating ongoing call, since the line will be busy until the person terminates the call and so on.

Further preferred embodiments are subject-matter of dependent claims.

The system can be further configured for leaving the device in locked state or unlocked state according to the device status before receiving the call. The voice recognition system can be implemented for all languages that are preferred by the user. The voice recognition system may e.g. comprise various dictionaries for different languages and may further be able to download further dictionaries for other languages. The term "dictionary" refers to a description of the keywords of a certain language that may be processed by the voice recognition system. Such descriptions may also be referred to as voice or language models.

The system can be configured for disabling the voice recognition system once the call is terminated. The device may include but is not limited to a mobile phone, a smartphone, a tablet, a personal computer, a laptop and so on.

The before mentioned object is also solved by a method for automatically terminating a voice call according to claim 6.

The method for automatically terminating a voice call may further comprise the steps of, disabling the voice recognition system once the call is terminated, and leaving the device in locked state or unlocked state according to a status of the device before receiving the call.

The invention is just exemplarily described with respect to the attached figures in the following.

### Brief Description of the Drawings

Fig. 1 illustrates the general block diagram of a system for automatically terminating a voice call, according to the present invention; and
Fig. 2 illustrates a method for automatically terminating a voice call, according to the present invention.

### Detailed Description of the Drawings

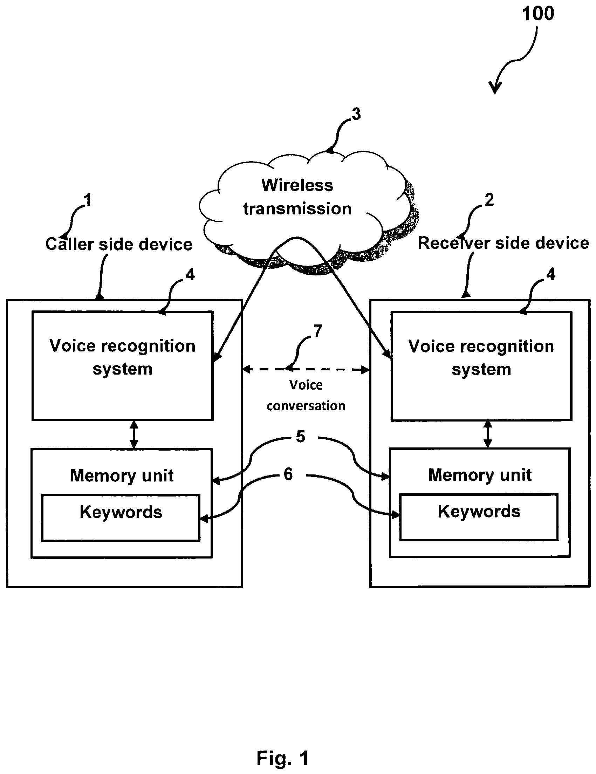

Fig. 1 illustrates the general block diagram 100 of a system for automatically terminating a voice call according to the present invention. The system for automatically terminating a voice call according to the present invention preferably comprises of a receiver side device 2, a caller side device 1, and a wireless communication 3 system for exchanging voice conversation 7 between caller and receiver. A voice recognition system 4 is provided in both the receiver and caller device along with defined keywords 6 provided in a memory of the each device. The voice recognition system 4 can be configured for recognizing the voice conversation 7 between the caller and the receiver. The system can be configured for detecting defined keywords 6 from the voice conversation 7 of the call. A set of defined keywords 6 are stored in a memory unit 5 of the device for the end of voice conversation. The system can recognize the keywords 6 such as 'see you', bye, and so on from the voice conversation 7 for terminating the call. The system can be further configured for checking whether the voice conversation 7 is continued or not for a predefined time. The system checks and waits for a predefined time hence sometimes the caller or receiver may take pass between conversations. In that case the system is not allowed to terminate the call or voice conversation.

The system further can be configured for terminating the call after detecting at least a defined keyword at the end of the voice conversation. This solution is beneficial since such a system can eliminate waste of energy for electronic devices, unnecessary communication band usage and so on. Further, the user's device may not show engaged tone when the user is not using the communication band. The system for automatically terminating a voice call according to the present invention can be applied or can be part of any device, which has a voice calling facility.

The system further can be configured for learning and storing new words that is used mostly in the end of the voice conversation. The system utilizes artificial intelligence technique to learn new words from the users that is stated at the end of the voice conversation. The voice recognition system 4 can be implemented for all languages that are preferred by the user. The system can be further configured for leaving the device in locked state or unlocked state according to the device status before receiving the call. The system can be configured for disabling the voice recognition system 4 once the call is terminated. The device may include but is not limited to a mobile phone, a smartphone, a tablet, a personal computer, a laptop and so on.

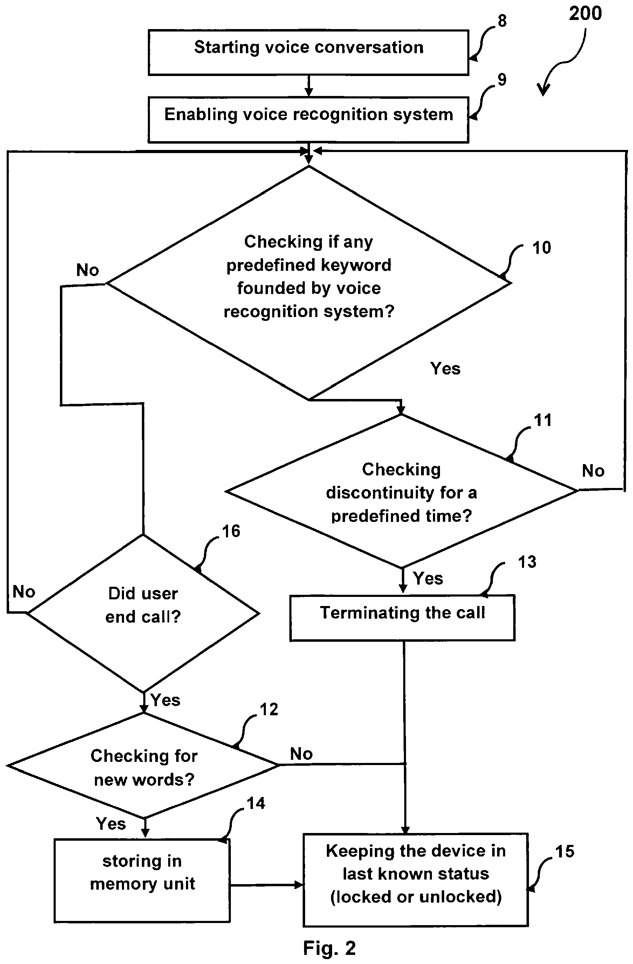

Exemplary methods for implementing a system for automatically terminating a voice call are described with reference to Fig 2. The methods are illustrated as a collection of operations in a logical flow graph representing a sequence of operations that can be implemented in hardware, software, firmware, or a combination thereof. In the context of software, the operations represent computer instructions that, when executed by one or more processors, perform the recited operations.

Fig. 2 illustrates a method 200 for automatically terminating a voice call, according to the present invention. The method for automatically terminating the voice call comprising the steps of, checking whether the phone is ringing 8 and the voice conversation 7 started or not, enabling 9 the voice recognition system 4 once the voice conversation 7 started.

It is then continuously checked 10 if defined keywords 6 appear in the voice conversation, recognizing the spoken words in the voice conversation 7. If no keyword 6 appears in the voice conversation 7, it is verified in step 16 if the user ended the call. If the user did not end the call, the method returns to step 10. If however, the user ended the call, the method checks 12 for presence of new keywords in the voice conversation 7 and stores 14 the new keywords before termination of the call in step S13.

If in step 10 a keyword is detected, the method continues with checking 11 discontinuity in the voice conversation 7 for a predefined time after recognizing the defined keywords 6. If the voice conversation 7 has discontinuity the method continues with step 13 of terminating the call.

If the answer in step 11 is NO the method returns to the beginning of item 10. If for example, both sides of the voice call say "bye", which may be a predefined keyword, but if they continue the conversation after a small time which is not exceeding the threshold level predefined, then it is assumed that the conversation is not ended. Therefore, the check for keywords is repeated to detect an actual end point of the voice call.

After terminating the call 13 the device is kept in the device's last known status 15 that may be either in locked or unlocked state. It is however understood, that a locked or unlocked state of the device are not the only possibilities. The device may be automatically returned to its previous usage scenario. For example, if user was in a phone gallery before the call arrived, then the system will automatically return the device to the gallery after terminating the call. If a user was listening music, then the music should continue where it was paused when the call arrived. If the user was browsing a web page, then the latest web page may be opened directly after the call. Any other usage scenario is also possible.

Thus, the present invention refers to a system and a method for automatically terminating a voice call. The system for automatically terminating the voice call preferably comprises of a voice recognition system 4 provided in a device. The voice recognition system 4 can be configured for recognizing the voice conversation 7 between a caller and a receiver. The system can detect defined keywords 6 from the voice conversation 7 of the call and can also check whether the voice conversation 7 is continued or not for a predefined time. After detecting at least a defined keyword at the end of the voice conversation, the system can terminate the call. A set of defined keywords 6 is stored in a memory unit 5 of the device to indicate the end of voice conversation 7 and also the system can learn some new words from the voice conversation 7 before the end of the call.

### List of reference numbers

- 1: caller side device
- 2: receiver side device
- 3: wireless transmission
- 4: voice recognition system
- 5: memory unit
- 6: keywords
- 7: voice conversation
- 8: starting voice conversation
- 9: enabling voice recognition system
- 10: checking for defined keywords?
- 11: checking discontinuity for a predefined time?
- 12: checking for new words?
- 13: terminating the call
- 14: storing in memory unit
- 15: keeping the device in last known status (locked or unlocked)

## Claims

1. A system for automatically terminating a voice call, the system comprising:
a memory unit (5) in a device configured to store a set of defined keywords (6) indicating the end of the voice conversation (7);
a voice recognition system (4) provided in the device and configured to recognize spoken words in a voice conversation (7) between a caller and a receiver;
wherein the voice recognition system (4) is configured to detect at least one keyword of the set of defined keywords (6) in the voice conversation (7) of the voice call;
wherein the voice recognition system is further configured to check whether the voice conversation (7) is continued or not for a predefined time after detecting at least one keyword; and
wherein the voice recognition system is configured to terminate the call after detecting at least one of the defined keywords (6) if the voice conversation (7) is not continued;
**characterized by**:
the system being further configured for learning and storing new words as keywords if the words are used in a plurality of cases at the end of a voice conversation (7).

2. The system of claim 1, wherein the system is further configured for leaving the device in a locked state or an unlocked state according to the device status before receiving the call.

3. The system of claim 1, wherein the voice recognition system (4) is implemented for all languages that are preferred by the user.

4. The system of claim 1, wherein the system is configured for disabling the voice recognition system (4) once the call is terminated.

5. The system of claim 1, wherein the device includes a mobile phone, a smartphone, a tablet, a personal computer, or a laptop.

6. A method for automatically terminating a voice call comprising the steps of
- enabling a voice recognition system (4) in a device at a beginning of the voice call;
- detecting at least one of a set of defined keywords (6) from the voice conversation (7) of the voice call;
- checking for a predefined time whether the voice conversation (7) is continued or not after the detection of the keyword (6); and
- terminating the call after detecting at least one of the defined keywords (6) if the voice conversation is not continued;
**characterized by**:
- learning and storing words as new keywords indicating the end of a voice conversation (7) if the words are used in a plurality of cases at the end of a voice conversation (7).

7. The method of claim 6, wherein the method for automatically terminating a voice call further comprising the steps of,
- disabling the voice recognition system (4) once the call is terminated; and
- leaving the device in a locked state or an unlocked state according to a status of the device before receiving the call.

## Patentansprüche

1. Ein System zum automatischen Beenden eines Sprachanrufs, wobei das System Folgendes umfasst:
eine Speichereinheit (5) in einer Vorrichtung, die so konfiguriert ist, dass sie einen Satz von definierten Schlüsselwörtern (6) speichert, die das Ende der Sprachkonversation (7) anzeigen;
ein Spracherkennungssystem (4), das in der Vorrichtung vorgesehen und so konfiguriert ist, dass es gesprochene Wörter in einer Sprachkonversation (7) zwischen einem Anrufer und einem Empfänger erkennt;
wobei das Spracherkennungssystem (4) so konfiguriert ist, dass es mindestens ein Schlüsselwort des Satzes von definierten Schlüsselwörtern (6) in der Sprachkonversation (7) des Sprachanrufs erkennt;
wobei das Spracherkennungssystem ferner so konfiguriert ist, dass es prüft, ob die Sprachkonversation (7) für eine vordefinierte Zeit nach dem Erfassen mindestens eines Schlüsselworts fortgesetzt wird oder nicht; und
wobei das Spracherkennungssystem so konfiguriert ist, dass es den Anruf nach dem Erkennen mindestens eines der definierten Schlüsselwörter (6) beendet, wenn die Sprachkonversation (7) nicht fortgesetzt wird;
**gekennzeichnet dadurch, dass**:
das System ferner zum Lernen und Speichern neuer Wörter als Schlüsselwörter konfiguriert ist, wenn die Wörter in einer Vielzahl von Fällen am Ende einer Sprachkonversation (7) verwendet werden.

2. System nach Anspruch 1, wobei das System ferner so konfiguriert ist, dass es die Vorrichtung in einem gesperrten Zustand oder in einem entsperrten Zustand belässt, je nach Zustand der Vorrichtung, bevor es den Anruf empfängt.

3. Das System nach Anspruch 1, bei dem das Spracherkennungssystem (4) für alle vom Benutzer bevorzugten Sprachen implementiert ist.

4. Das System nach Anspruch 1, wobei das System so konfiguriert ist, dass es das Spracherkennungssystem (4) deaktiviert, sobald der Anruf beendet ist.

5. Das System nach Anspruch 1, wobei das Gerät ein Mobiltelefon, ein Smartphone, ein Tablet, einen Personal Computer oder einen Laptop umfasst.

6. Ein Verfahren zum automatischen Beenden eines Sprachanrufs, das die folgenden Schritte umfasst
- Aktivierung eines Spracherkennungssystems (4) in einem Gerät zu Beginn des Sprachanrufs;
- Erkennen von mindestens einem aus einem Satz von definierten Schlüsselwörtern (6) aus der Sprachkonversation (7) des Sprachanrufs;
- Prüfen für eine vordefinierte Zeit, ob die Sprachkonversation (7) nach der Erfassung des Schlüsselwortes (6) fortgesetzt wird oder nicht; und
- Beenden des Anrufs nach Erkennung mindestens eines der definierten Schlüsselwörter (6), wenn das Gespräch nicht fortgesetzt wird;
**gekennzeichnet durch**:
- das Lernen und Speichern von Wörtern als neue Schlüsselwörter, die das Ende einer Sprachkonversation (7) anzeigen, wenn die Wörter in einer Vielzahl von Fällen am Ende einer Sprachkonversation (7) verwendet werden.

7. Verfahren nach Anspruch 6, wobei das Verfahren zum automatischen Beenden eines Sprachanrufs ferner die folgenden Schritte umfasst,
- Deaktivierung des Spracherkennungssystems (4), sobald der Anruf beendet ist; und
- das Gerät in einem gesperrten oder entsperrten Zustand zu belassen, je nach Zustand des Geräts vor dem Empfang des Anrufs.

## Revendications

1. Un système de terminaison automatique d'un appel vocal, le système comprenant :
une unité de mémoire (5) dans un dispositif configuré pour stocker un ensemble de mots clés définis (6) indiquant la fin de la conversation vocale (7) ;
un système de reconnaissance vocale (4) fourni dans le dispositif et configuré pour reconnaître des mots parlés dans une conversation vocale (7) entre un appelant et un récepteur ;
dans lequel le système de reconnaissance vocale (4) est configuré pour détecter au moins un mot clé de l'ensemble des mots clés définis (6) dans la conversation vocale (7) de l'appel vocal ;
dans lequel le système de reconnaissance vocale est en outre configuré pour vérifier si la conversation vocale (7) se poursuit ou non pendant un temps prédéfini après avoir détecté au moins un mot clé ; et
dans lequel le système de reconnaissance vocale est configuré pour mettre fin à l'appel après avoir détecté au moins un des mots clés définis (6) si la conversation vocale (7) n'est pas poursuivie ;
**caractérisé par** :
le système est en outre configuré pour apprendre et stocker de nouveaux mots comme mots clés si les mots sont utilisés dans une pluralité de cas à la fin d'une conversation vocale (7).

2. Le système selon la revendication 1, dans lequel le système est en outre configuré pour laisser le dispositif dans un état verrouillé ou un état déverrouillé selon l'état du dispositif avant de recevoir l'appel.

3. Le système selon la revendication 1, dans lequel le système de reconnaissance vocale (4) est mis en oeuvre pour toutes les langues préférées par l'utilisateur.

4. Le système selon la revendication 1, dans lequel le système est configuré pour désactiver le système de reconnaissance vocale (4) une fois l'appel terminé.

5. Le système de la revendication 1, dans lequel l'appareil comprend un téléphone mobile, un smartphone, une tablette, un ordinateur personnel ou un ordinateur portable.

6. Une méthode pour mettre fin automatiquement à un appel vocal comprenant les étapes suivantes
- activer un système de reconnaissance vocale (4) dans un appareil au début de l'appel vocal ;
- la détection d'au moins un des mots clés définis (6) dans la conversation vocale (7) de l'appel vocal ;
- vérifier pendant un temps prédéfini si la conversation vocale (7) se poursuit ou non après la détection du mot-clé (6) ; et
- mettre fin à l'appel après avoir détecté au moins un des mots clés définis (6) si la conversation vocale n'est pas poursuivie ;
**caractérisé par** :
- l'apprentissage et le stockage de mots comme nouveaux mots clés indiquant la fin d'une conversation vocale (7) si les mots sont utilisés dans une pluralité de cas à la fin d'une conversation vocale (7).

7. Méthode de la revendication 6, dans laquelle la méthode pour mettre fin automatiquement à une conversation vocale comprend en outre les étapes de ,
- la désactivation du système de reconnaissance vocale (4) une fois l'appel terminé ; et
- laisser l'appareil dans un état verrouillé ou un état déverrouillé selon l'état de l'appareil avant de recevoir l'appel.
